# EUROPÄISCHE PATENTSCHRIFT

(11) **EP 3 727 777 B1**
(45) Veröffentlichungstag und Bekanntmachung des Hinweises auf die Patenterteilung: **08.12.2021**
(21) Anmeldenummer: 18829184.3
(22) Anmeldetag: 14.12.2018
(51) Int. Cl.: B29B 7/40, B29B 7/60, B29B 7/74, B29B 7/82, B29B 7/84, B05C 5/00, B05C 5/02, B05C 11/10

(54) **VORRICHTUNG UND VERFAHREN ZUR HERSTELLUNG VON KUNSTSTOFFTEILEN, INSBESONDERE VON KLEBEAPPLIKATIONEN**
DEVICE AND METHOD FOR THE PRODUCTION OF PLASTIC PARTS, MORE PARTICULARLY OF ADHESIVE APPLICATIONS
DISPOSITIF ET PROCÉDÉ POUR LA FABRICATION DE PIÈCES EN MATÉRIAU SYNTHÉTIQUE, EN PARTICULIER D'APPLICATIONS ADHÉSIVES

(30) Priorität: 19.12.2017 AT 510482017
(43) Veröffentlichungstag der Anmeldung: 28.10.2020
(73) Patentinhaber: Henkel AG & Co. KGaA, 40589 Düsseldorf (DE)
(72) Erfinder: METZLER, Mario, 6850 Dornbirn (AT)
(86) Internationale Anmeldenummer: PCT/AT2018/060303
(87) Internationale Veröffentlichungsnummer: WO 2019/119005

(56) Entgegenhaltungen:
- WO-A1-2006/079299
- AT-B1- 519 978
- DE-A1- 1 504 654
- DE-B- 1 155 234
- DE-B4-102012 103 885
- US-A- 4 549 915

## Beschreibung

Die vorliegende Erfindung betrifft eine Vorrichtung zur Herstellung von Kunststoffteilen, insbesondere von Klebeapplikationen, Dichtungsraupen, Vergussteilen oder Ähnliches, mit einer ersten Kunststoff-Zuführvorrichtung zum Zuführen einer ersten flüssigen Kunststoffausgangskomponente, einer zweiten Kunststoff-Zuführvorrichtung zum Zuführen einer zweiten flüssigen Kunststoffausgangskomponente, einer Mischvorrichtung mit einer Mischkammer, wobei in der Mischkammer die von den Kunststoff-Zuführvorrichtungen zuführbaren flüssigen Kunststoffausgangskomponenten zu einer Kunststoffmischung vermischbar sind, einer Ausbringdüse zum Ausbringen der Kunststoffmischung und einer Kühlvorrichtung für die Mischvorrichtung. Zudem betrifft die Erfindung ein Verfahren zum Betreiben einer solchen Vorrichtung, mit den Schritten Zuführen einer erste flüssigen Kunststoffausgangskomponente und einer zweiten flüssigen Kunststoffausgangskomponente zu einer Mischkammer einer Mischvorrichtung, Vermischen der flüssigen Kunststoffausgangskomponenten in der Mischkammer zu einer Kunststoffmischung, Kühlen der Mischvorrichtung durch eine, insbesondere die Mischkammer zumindest bereichsweise, umgebenden Kühlvorrichtung und Ausbringen der Kunststoffmischung durch eine Ausbringdüse.

Mit solchen Vorrichtungen bzw. mit einem solchen Verfahren werden vorwiegend Klebeprodukte und Klebstoffapplikationen hergestellt. Es kann aber auch ein Kunststoffverguss hergestellt werden. Weiters können auch Kunststoffschäume, z. B. in Form von Dichtungsraupen, hergestellt werden.

Die WO 2006/079299 A1 offenbart ein Extrudersystem zum Strangformen eines Fluids mit mindestens einer Zuführvorrichtung, mindestens einer Mischvorrichtung und mindestens einem Extruderwerkzeug. Es ist vorgesehen, dass mindestens eine Einrichtung zum Erzeugen eines das zu extrudierende Material ganz oder teilweise umgebenden Fluidstroms (Transportfluid) vorhanden ist, der zu der Austrittsrichtung des zu extrudierenden Materials im wesentlichen parallel verläuft, und wobei das Fluid durch Saugen und/ oder Drücken des Transportfluidstroms mittels eines Austriebsgases aus dem Extrudersystem ausgetragen wird. Für bestimmte Anwendungen und zu formende Fluide bzw. Materialien ist es notwendig, hinter dem Extruderwerkzeug eine Trocknungsvorrichtung für das ausgetragene Fluid anzuordnen. Dies ist besonders dann der Fall, wenn das jeweilige Fluid erst durch Abtrocknen in einen festen und formstabilen Zustand übergeht.

Die DE 1 504 654 A1 offenbart ein Verfahren zur Herstellung verfestigter Kunstharz-Schäume.

Ein Beispiel für einen gattungsbildenden Stand der Technik geht aus der WO 2017/004635 A1 hervor. Diese zeigt eine Vorrichtung mit intermittierend bereitgestellter flüssiger Kunststoffkomponente.

Bei der darin beschriebenen Herstellung von geschäumten Kunststoffteilen in Form von Dichtungsraupen - wie auch bei der Ausgangslage bei einem möglichen Ausführungsbeispiel der vorliegenden Erfindung - kommt es zu einem chemischen Prozess. Die Reaktionsgeschwindigkeit von chemischen Prozessen hängt in der Regel sehr stark von der Temperatur ab, bei welcher die Prozesse ablaufen. Eine Faustregelbesagt, dass sich die Reaktionsgeschwindigkeit der Prozesse bei einer Temperaturerhöhung von ca. 10° C etwa verdoppelt. Auch die chemischen Prozesse in 2-Komponenten-Mischköpfen (entspricht der Mischvorrichtung) unterliegen weitgehend dieser Regel. Meist ist es erwünscht, dass die aus den Mischköpfen ausgetragene Masse (Klebstoff, Verguss, Schaum) möglichst schnell aushärtet, damit beispielsweise die Taktzeit des Herstellungsprozesses verkürzt werden kann. Zu diesem Zweck werden spezielle Materialien entwickelt, welche von Grund auf eine sehr hohe Reaktionsgeschwindigkeit haben. Diese sehr hohen Reaktionsgeschwindigkeiten führen aber dazu, dass der Reaktionsprozess der beiden Komponenten bereits beim Vermischen im Mischkopf bis zu einem gewissen Punkt fortschreitet. Dies führt in weiterer Folge schnell zu Verschmutzungen und Anhaftungen in der Mischkammer des Mischkopfs. Zudem können prozessbedingte Wartezeiten zwischen den Dosierungen zusätzlich zu Verschmutzungen führen. Um der Verschmutzung entgegenzuwirken, wird vermehrt auf die Kühlung der Mischköpfe gesetzt. Dabei zirkuliert meist eine Kühlflüssigkeit durch Kanäle im Bereich der Mischkammer und reduziert lokal die Temperatur deutlich, insbesondere die Temperatur der Mischkammerwandungen. Alternativ ist auch eine Kontaktkühlung mit thermisch-elektrischen Elementen möglich. Mit dieser Maßnahme kann der Verschmutzungseffekt meist deutlich verlangsamt bzw. reduziert werden.

Üblicherweise sind Mischköpfe und deren Mischkammern aus Aluminium oder Edelstahl gefertigt. Beides sind vergleichsweise sehr gute Wärmeleiter, wodurch nicht nur der innere Bereich des Mischkopfs gekühlt wird, sondern auch die äußere Oberfläche des Mischkopfs annähernd die Temperatur der Kühlflüssigkeit annimmt.

Die minimal erreichbare Mischkopf- bzw. Mischkammertemperatur wird hauptsächlich durch die unerwünschte Kondenswasserbildung limitiert. Wird der Mischkopf unter den Taupunkt der Umgebungsluft gekühlt, bildet sich an der Außenseite des Mischkopfs Kondenswasser. Das Wasser kann im Extremfall sogar als Tropfen auf das darunterliegende Bauteil gelangen. Da Wasser der treibende Baustein bei der Polyurethanschaumreaktion sein kann, kann schon ein einzelner Tropfen dazu führen, dass das darunterliegende Bauteil unbrauchbar wird. In vielen Regionen der Welt und auch in den Sommermonaten in Mitteleuropa kann der Taupunkt der Umgebungsluft deutlich über 20° C steigen. Eine ernsthafte Kühlung ohne Unterschreiten des Taupunkts ist dabei praktisch nicht möglich.

Um diesem Problem Herr zu werden, sind bisher zwei Lösungsansätze bekannt.

Beim ersten Ansatz wird versucht, den Taupunkt zu messen und beim Erreichen des Taupunkts die Kühlleistung zu reduzieren. Mit dieser Methode kann insbesondere im Sommer keine besonders hohe Kühlleistung erreicht werden.

Bei der zweiten Möglichkeit wird versucht, die gesamte Oberfläche des Mischkopfs zu isolieren. Insbesondere bei komplexen Mischköpfen ist die exakte Formgebung der Isolierung aufwändig, da der Mischkopf uneingeschränkt zugänglich sein sollte. Zusätzlich werden erhöhte Anforderungen an das Isoliermaterial gestellt, da es bei z. B. offenporigen Materialien zu einer Durchfeuchtung (Schwammeffekt) kommt, was unter anderem wiederum zu einer Reduzierung des Isolierungseffekts führt. Zudem muss ein einfaches Reinigen der Isolierung mit z. B. Lösungsmittel möglich sein, da beim industriellen Einsatz des isolierten Mischkopfs oft äußerliche Verschmutzungen auftreten.

Die Aufgabe der vorliegenden Erfindung besteht daher darin, eine verbesserte Vorrichtung zur Herstellung von Kunststoffteilen zu schaffen. Insbesondere sollen die oben angeführten Probleme behoben werden. Das heißt, es soll eine hohe Kühlleistung bei gleichzeitig geringer bzw. keiner Kondenswasserbildung erreicht werden.

Dies wird durch eine Vorrichtung mit den Merkmalen von Anspruch 1 gelöst. Demnach ist erfindungsgemäß eine die Mischvorrichtung zumindest bereichsweise umgebende Trocknungsvorrichtung vorgesehen, wobei die Trocknungsvorrichtung eine Trennvorrichtung, einen zwischen Trennvorrichtung und Mischvorrichtung ausgebildeten Trocknungsraum und eine in den Trocknungsraum mündende Trocknungsmittel-Zuführvorrichtung aufweist. Mit anderen Worten wird also um die gekühlte Mischvorrichtung (Mischkopf) eine Atmosphäre geschaffen, in welcher der Taupunkt möglichst niedrig ist, sodass es erst gar nicht zu einer Kondenswasserbildung auf der Oberfläche der Mischvorrichtung kommt. Die Trennvorrichtung fungiert dabei vor allem als Leitvorrichtung für das Trocknungsmittel, welche das Trocknungsmittel entlang der Oberfläche der Mischvorrichtung führt bzw. leitet. Deswegen kann die Trennvorrichtung zu einem gewissen Maße luftdurchlässig sein bzw. sogar Spalte aufweisen, solange eben insgesamt noch eine Leitwirkung gegeben ist. Im einfachsten Fall kann die Trennvorrichtung aus einem Stoff bestehen. Bevorzugt ist die Trennvorrichtung im Wesentlichen gasundurchlässig ausgebildet.

Bevorzugte Ausführungsbeispiele der vorliegenden Erfindung sind zudem in den abhängigen Ansprüchen angegeben.

Generell ist es möglich, dass als Trocknungsmittel ein Schutzgas (z. B. Argon oder Stickstoff) verwendet und über die Trocknungsmittel-Zuführvorrichtung zugeführt wird. Bevorzugt ist allerdings vorgesehen, dass als Trocknungsmittel Luft, insbesondere Druckluft, verwendet wird. Besonders bevorzugt ist vorgesehen, dass durch die Trocknungsmittel-Zuführvorrichtung Druckluft in den Trocknungsraum, vorzugsweise kontinuierlich, einleitbar ist. Entscheidend ist vor allem der niedrige Taupunkt des Gases bzw. der Luft. Um die Bildung von Kondenswasser zu vermeiden und gleichzeitig eine gute Kühlleistung zu erreichen, ist aber bevorzugt vorgesehen, dass das Trocknungsmittel, vorzugsweise in Form von Druckluft oder in Form eines Schutzgases, einen Taupunkt von unter 10° C, vorzugsweise von unter 5° C, aufweist.

Weiters ist bevorzugt vorgesehen, dass die Trocknungsmittel-Zuführvorrichtung eine Trocknungsmittel-Quelle, vorzugsweise eine Druckluft-Erzeugungsvorrichtung, und ein mit der Trocknungsmittel-Quelle verbundene Zuführelement aufweist. Zudem kann bevorzugt vorgesehen sein, dass das Zuführelement auf einen unteren Bereich der Mischvorrichtung, vorzugsweise auf die Ausbringdüse, gerichtet ist. Das Zuführelement kann aber auch so im Mischkopf ausgebildet sein, dass das Trocknungsmittel aus dem Mischkopf heraus in den Trockenraum strömt. Es kann also im Mischkopf ein entsprechender Kanal ausgebildet sein.

Generell ist vorgesehen, dass die Vorrichtung eine Längsachse aufweist. Bevorzugt stimmt diese Längsachse mit der Ausbringrichtung der Kunststoff-Gas-Mischung im Wesentlichen überein. Die Trennvorrichtung kann an sich beliebig ausgebildet sein, solange eine gewünschte Atmosphäre im Großteil des Trocknungsraums gewährleistet wird. Gut geeignet sind zum Beispiel Trennvorrichtungen, die taschenförmig, wannenförmig, kappenförmig, schalenförmig oder haubenförmig ausgebildet sind. Bezüglich der konkreten Form der Trennvorrichtung ist bevorzugt vorgesehen, dass die Trennvorrichtung einen Basisbereich, welcher den Trocknungsraum in axialer Richtung von der Umgebung abtrennt, und einen mit dem Basisbereich verbundenen Mantelbereich, welcher den Trocknungsraum in radialer Richtung von der Umgebung abtrennt, aufweist. Die axiale Richtung und die radiale Richtung beziehen sich dabei jeweils auf die Längsachse der Vorrichtung.

Gemäß einem bevorzugt Ausführungsbeispiel ist vorgesehen, dass der Mantelbereich die Mischvorrichtung in radialer Richtung vollständig umschließt. Alternativ kann auch vorgesehen sein, dass die Trennvorrichtung, z. B. im Mantelbereich, Schlitze bzw. Spalte aufweist, sodass das eingeleitete Trocknungsmittel auch wieder entweichen kann.

Die Trennvorrichtung muss den Bereich um die Mischvorrichtung nicht hermetisch einhüllen. Vielmehr ist bevorzugt vorgesehen, dass die Trennvorrichtung in einem vom Basisbereich abgewandten Gegenbereich zur Umgebung hin offen ist.

Bevorzugt ist die Trennvorrichtung im unteren, im Bereich der Ausbringdüse angeordneten Basisbereich zur Umgebung hin abgeschlossen. Bevorzugt ist vorgesehen, dass die Trennvorrichtung eine, vorzugsweise zentral im Basisbereich angeordnete, Öffnung aufweist, durch welche die Ausbringdüse hindurchragt. Wenn diese Öffnung zudem eine Verbindung zum Trockenraum aufweist, strömt trockene Luft entlang der Düse und trocknet auch diese.

Die Kühlvorrichtung sollte so ausgebildet sein, dass sich eine ausreichende Kühlwirkung in der Mischkammer entfalten kann. Beispielsweise kann die Kühlvorrichtung in Form einer Kontaktkühlung ausgebildet sein. Bevorzugt ist allerdings vorgesehen, dass die Kühlvorrichtung zumindest einen,

vorzugsweise wellenförmig oder zick-zack-förmig ausgebildeten, Kühlkanal aufweist, welcher in einem Gehäuse der Mischvorrichtung ausgebildet ist. Beispielhaft sei als mögliche Form des Kühlkanals auf die DE 10 2012 103 885 B4 verwiesen. Generell fließt im Kühlkanal ein Kühlmittel, vorzugsweise eine Kühlflüssigkeit.

Die Trennvorrichtung kann aus demselben Material wie die Mischvorrichtung gebildet sein, das heißt aus Metall (z. B. Aluminium). Für eine günstigere und weniger aufwändige Ausgestaltung ist aber bevorzugt vorgesehen, dass die Trennvorrichtung zum Großteil aus einem flexiblen, vorzugsweise faserverstärkten, Kunststoff oder aus einem starren Kunststoff besteht. Bevorzugt ist hierzu vorgesehen, dass der Kunststoff der Trennvorrichtung Polyamid, Polyethylen oder Polypropylen enthält. Generell ist ein isolierender Hüllenwerkstoff vorteilhaft, da dieser energieeffizienter ist und eine geringere Gefahr von Kondenswasserbildung auf der Außenseite der Haube birgt.

Gemäß einem bevorzugten Ausführungsbeispiel ist vorgesehen, dass die Kunststoff-Zuführvorrichtungen jeweils mit einer Kunststoffquelle verbunden sind.

Kunststoffausgangskomponenten können Kunststoffvorprodukte sein oder selbst bereits Kunststoffe sein. Bevorzugt wird als erste und/oder zweite Kunststoffausgangskomponente Polyol, Isocyanat, Silikon, Epoxidharz, MS-Polymere, Kleberkomponente, Boosterpaste oder ähnliches verwendet.

Vor allem wenn auch ein geschäumtes Produkt hergestellt werden soll, kann gemäß einem bevorzugten Ausführungsbeispiel eine Gas-Zuführvorrichtung zum Zuführen von Gas zur ersten flüssigen Kunststoffausgangskomponente, zur zweiten flüssigen Kunststoffausgangskomponente oder zur Kunststoffmischung vorgesehen sein, wobei die Gas-Zuführvorrichtung mit einer Gasquelle verbunden ist.

Die erfindungsgemäße Aufgabe wird auch durch ein Verfahren gemäss Anspruch 15 gelöst, bei dem der Schritt Trocknen der Mischvorrichtung mit einer die Mischvorrichtung zumindest bereichsweise umgebenden Trocknungsvorrichtung vorgesehen ist, wobei die Trocknungsvorrichtung eine Trennvorrichtung, einen zwischen Trennvorrichtung und Mischvorrichtung ausgebildeten Trocknungsraum und eine in den Trocknungsraum mündende Trocknungsmittel-Zuführvorrichtung aufweist. In der Industrie eingesetzte Druckluft hat üblicherweise einen Taupunkt der unter 5° C liegt und ist somit meist deutlich trockener als die Umgebungsluft. Druckluft ist in den meisten industriellen Fertigungsstätten ausreichend vorhanden. Um das Trocknen möglichst günstig durchführen zu können, sollten bereits die entsprechenden in der Anlage vorhandenen Geräte verwendet werden. Deswegen ist bevorzugt vorgesehen, dass durch eine Druckluft-Erzeugungsvorrichtung der Trocknungsvorrichtung zwischen 100 und 500 Normliter pro Stunde in den Trocknungsraum eingeleitet werden. Es kann also eine auch für andere Zwecke verwendete Druckluft-Erzeugungsvorrichtung für die Trocknungsvorrichtung verwendet werden (auch Abluft von Ventilen kann verwendet werden). Da die Herstellkosten von Druckluft relativ gering sind (in der Literatur wird von 2,5 Cent/m3 gesprochen, spielen die Kosten der verbrauchten Druckluft in Kombination mit dem geringen Luftverbrauch der Trocknungsvorrichtung von nicht einmal einem halben Kubikmeter pro Stunde wirtschaftlich praktisch keine Rolle. Theoretisch könnte auch lokal getrocknete Luft erzeugt werden, z.B. durch Granulat oder einen kleinen Membrantrockner, wodurch eine Verbindung mit einem Druckluftnetz nicht nötig wäre.

Zusammenfassend kann festgehalten werden, dass die Trocknung dadurch erreicht wird, dass eine Trennvorrichtung zur Erzeugung einer relativ trockenen Atmosphäre die Mischvorrichtung umhüllt. Im Speziellen wird der Mischkopf im gekühlten Bereich mit einer Art umgedrehten Haube überzogen. Diese Haube muss weder besonders eng anliegen noch extrem dicht sein (es ist nicht vorgesehen, dass Kondenswasser durch die Haube aufgesammelt wird). In diese Haube wird ein sehr geringer Strom getrocknete Druckluft (kann auch getrocknete Luft ohne hohen Druck sein, die z.B. mit einem Lüfter eingebracht wird) eingeleitet (wenige Normliter pro Minute). Dadurch wird im gekühlten Bereich eine Atmosphäre erzeugt, welche sich insbesondere bezüglich des Taupunkts von der feuchten Umgebungsluft deutlich unterscheidet. Die überflüssige Druckluft strömt insbesondere an der oberen Öffnung der Haube aus. Wird der Luftstrom minimiert, bildet sich eine Art Isolierschicht um den Mischkopf, welche die Effektivität der Kühlung noch zusätzlich erhöht.

Weitere Einzelheiten und Ausführungsbeispiele der vorliegenden Erfindung werden anhand der Figurenbeschreibung unter Bezugnahme auf die in den Zeichnungen dargestellten Ausführungsbeispiele im Folgenden näher erläutert. Darin zeigen:
Fig. 1 einen schematisch dargestellten Schnitt durch die Vorrichtung,
Fig. 2 eine perspektivische Ansicht der Mischvorrichtung ohne Trennvorrichtung,
Fig. 3 eine perspektivische Ansicht der Mischvorrichtung mit Trennvorrichtung und
Fig. 4 schematisch einen Schnitt durch eine Vorrichtung.

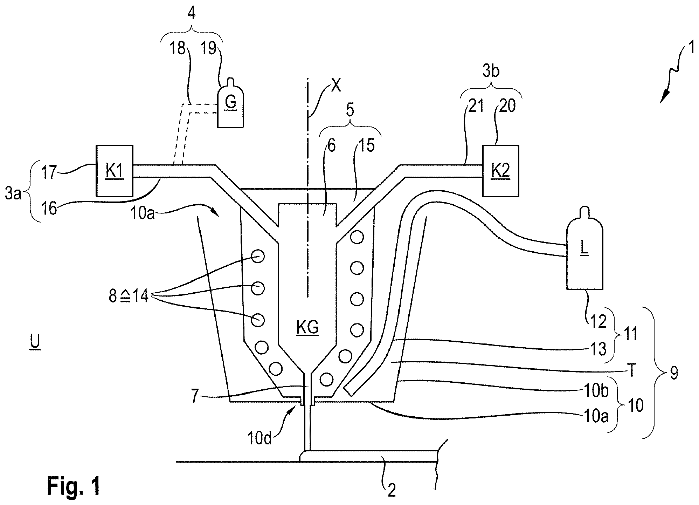

In Fig. 1 ist eine Vorrichtung 1 zur Herstellung von Kunststoffteilen 2 in einem schematischen Schnitt dargestellt. Konkret handelt es sich bei dem in diesem Fall geschäumten Kunststoffteil 2 um eine Dichtungsraupe. Die Vorrichtung 1 weist als eine wesentliche Komponente die Mischvorrichtung 5 auf. Die Mischvorrichtung 5 weist ein, vorzugsweise metallisches, Gehäuse 15 auf, in welchem eine Mischkammer 6 ausgebildet ist. Im Gehäuse 15 dieser Mischvorrichtung 5 ist ein Kühlkanal 14 der Kühlvorrichtung 8 ausgebildet. Im dargestellten Ausführungsbeispiel ist der Kühlkanal 14 helixförmig (gewendelt) um die Längsachse X ausgebildet. Der Kühlkanal 14 kann aber auch wellenförmig ausgebildet sein. Der Kühlkanal 14 steht mit einer nicht dargestellten Kühlmittelquelle in Verbindung. Als Kühlmittel kann eine Kühlflüssigkeit wie beispielsweise Kühlwasser, Öl, Glykol-Wassergemisch, Alkohol, oder ähnliches eingesetzt werden. In die Mischkammer 6 mündet eine Leitung 16 der ersten Kunststoff-Zuführvorrichtung 3a. Die erste Kunststoff-Zuführvorrichtung 3a steht mit einer Quelle 17 für eine erste flüssige Kunststoffausgangskomponente K1 in Verbindung. In die erste Kunststoff-Zuführvorrichtung 3a kann über eine strichliert dargestellte Leitung 18 Gas G von einer Gasquelle 19 zugeführt werden. Das Gas G kann aber auch direkt in die Mischkammer 6 eingeleitet werden. Die Leitung 18 bildet zusammen mit der Gasquelle 19 die Gas-Zuführvorrichtung 4. Die zweite Kunststoff-Zuführvorrichtung 3b weist eine Quelle 20 für eine zweite flüssige Kunststoffausgangskomponente K2 und eine Leitung 21 auf. Die Leitung 21 mündet in die Mischkammer 6 der Mischvorrichtung 5. In der Mischkammer 6 vermischen sich die erste flüssige Kunststoffausgangskomponente K1 mit der zweiten flüssigen Kunststoffausgangskomponente K2 zur Kunststoffmischung KG (wobei gegebenenfalls auch Gas G enthalten ist). Eine Ausbringdüse 7 ist im Gehäuse 15 der Mischvorrichtung 5 ausgebildet. Durch das Ausbringen der Kunststoffmischung KG entsteht das Kunststoffteil 2. Beim Ausbringen einer Kunststoffmischung KG in Form einer Kunststoff-Gas-Mischung) aus der Ausbringdüse 7 schäumt das Gas G aus, wodurch ein geschäumtes Kunststoffteil 2 entsteht. Generell kann mit der Mischvorrichtung 5 ein dynamisches Mischen (mit einem Rührer), ein statisches Mischen oder ein Hochdruckmischen durchgeführt werden.

Bei der Vermischung der eingebrachten Komponenten entsteht eine chemische Reaktion, bei welcher Wärme abgegeben wird (bei dynamischem Mischen entsteht der wesentliche Teil der Wärme durch die Rührenergie). Um eine zu starke und frühzeitige Reaktion bereits in der Mischkammer 6 zu verhindern, ist die die Mischkammer 6 umgebende Kühlvorrichtung 8 vorgesehen. Wenn die Kühlvorrichtung 8 die Mischvorrichtung 5 (im Speziellen den Mischkopf) auf eine Temperatur kühlt, die unter der Taupunkttemperatur der Umgebung U liegt, bildet sich Kondenswasser auf der Oberfläche der Mischvorrichtung 5. Dieses Kondenswasser kann auf das produzierte Kunststoffteil 2 tropfen und dabei das Kunststoffteil 2 beschädigen.

Um dies zu verhindern, ist eine Trocknungsvorrichtung 9 vorgesehen. Diese Trocknungsvorrichtung 9 weist eine (vorzugsweise im Wesentlichen gasundurchlässige) Trennvorrichtung 10, eine Trocknungsmittel-Zuführvorrichtung 11 (in Form eines Zuführelements 13 samt Trocknungsmittel-Quelle 12) und einen Trocknungsraum T zwischen Trennvorrichtung 10 und Oberfläche der Mischvorrichtung 5 auf. Die Trennvorrichtung 10 weist beim dargestellten Ausführungsbeispiel einen den Trocknungsraum T axial begrenzenden Basisbereich 10a und einen den Trocknungsraum T radial begrenzenden Mantelbereich 10b auf. Die Trocknungsmittel- Quelle 12 ist in Form einer Druckluft-Erzeugungsvorrichtung ausgebildet. Druckluft L wird von dieser Druckluft-Erzeugungsvorrichtung über das schlauchförmige Zuführelement 13 in den von der Trennvorrichtung 10 umhüllten Trocknungsraum T eingeleitet. Die Auslassöffnung des Zuführelements 13 kann dabei - im Gegensatz zur Darstellung in Fig. 1 - auch bereits im Bereich der oberen Öffnung der Trennvorrichtung angeordnet sein. Um die Kondenswasserbildung zu unterbinden ist es ausreichend, wenn ca. 100 bis 500 Normliter pro Stunde an Druckluft L in den Trocknungsraum T eingeleitet werden. Dadurch wird im Trocknungsraum T eine Taupunkttemperatur von ca. 5° C erreicht. Das eingeleitete Trocknungsmittel kann über den zur Umgebung U hin offenen Gegenbereich 10c (oder über sonstige Öffnungen) nach und nach entweichen. Im Basisbereich 10 ist eine zentrale Öffnung 10d ausgebildet. Durch diese zentrale Öffnung 10d ragt die Spitze der Ausbringdüse 7 in axialer Richtung hindurch. Die Trennvorrichtung 10 kann aus einem starren bzw. festen Kunststoff bestehen. Alternativkann die Trennvorrichtung 10 auch aus einem relativ weichen Stoff, aus einer Folie, aus Metall, etc. bestehen. Bevorzugt ist die Trennvorrichtung 10 mit der Mischvorrichtung 5 lösbar verbunden. Bei der Ausführung gemäß Fig. 1 kann die lösbare Verbindung der Trennvorrichtung 10 mit der Mischvorrichtung 5 durch Aufstecken erfolgen. Diese (nicht dargestellte) Steckverbindung kann zum Beispiel im Bereich der Ausbringdüse 7 oder auch im düsenabgewandten Bereich der Mischvorrichtung 5 vorgesehen sein.

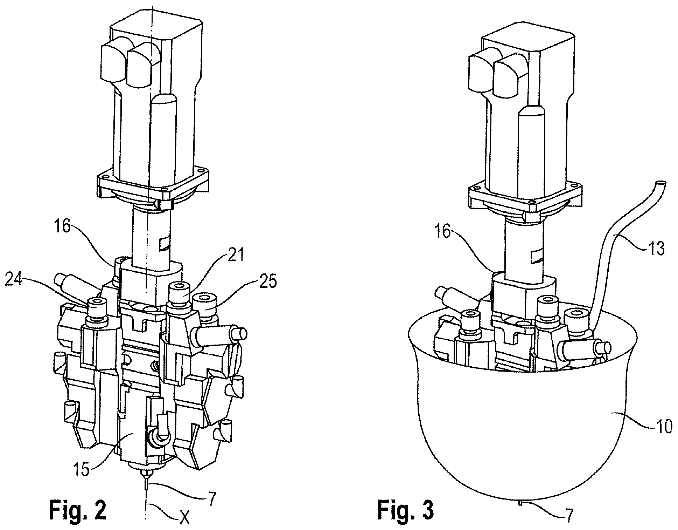

In Fig. 2 ist die Vorrichtung 1 in einer perspektivischen Ansicht dargestellt. Auf der linken Seite ist die Leitung 16 (Vorlauf) der ersten Kunststoff-Zuführvorrichtung 3a erkennbar. Zudem ist auch ein entsprechender Rücklauf 24 vorgesehen. Im rechten Bereich ist die Leitung 21 (Vorlauf) der zweiten Kunststoff-Zuführvorrichtung 3b dargestellt. Zudem ist auch ein entsprechender Rücklauf 25 vorgesehen. Im rechten Bereich ist die Zuführleitung 22 (bzw. dessen Anschluss) der Kühlvorrichtung 8 dargestellt. Über eine nicht dargestellte Zuführleitung 22 wird Kühlmittel in die Kühlkanäle 14 geleitet. Die Oberfläche des Gehäuses 15 der Mischvorrichtung 5 ist ebenfalls ersichtlich. Das Zuführelement 13 der Trocknungsmittel-Zuführvorrichtung 11 ist nicht dargestellt. Beispielsweise kann ein Luftkanal durch den Mischkopf führen und z.B. an dessen Unterseite austreten, welcher dann das Zuführelement 13 bildet.

In Fig. 3 ist nochmals dieselbe perspektivische Ansicht der Vorrichtung 1 dargestellt, wobei die Mischvorrichtung 5 von der Trennvorrichtung 10 der Trocknungsvorrichtung 9 umhüllt ist. Es ist erkennbar, dass die Trennvorrichtung 10 in Form einer Haube ausgebildet ist. Diese Trennvorrichtung 10 besteht aus einem flexiblen Kunststoff. Die Trennvorrichtung 10 der Trocknungsvorrichtung 9 ist über nicht dargestellte Verbindungselemente, z. B. in Form von Verbindungsbändern oder Schnappelementen, an Komponenten der Vorrichtung 1 gehalten. Im Basisbereich 10a der Trennvorrichtung 10 ragt die Ausbringdüse 7 axial hervor. Das in diesem Fall schlauchförmige Zuführelement 13 führt von oben in den Trocknungsraum T.

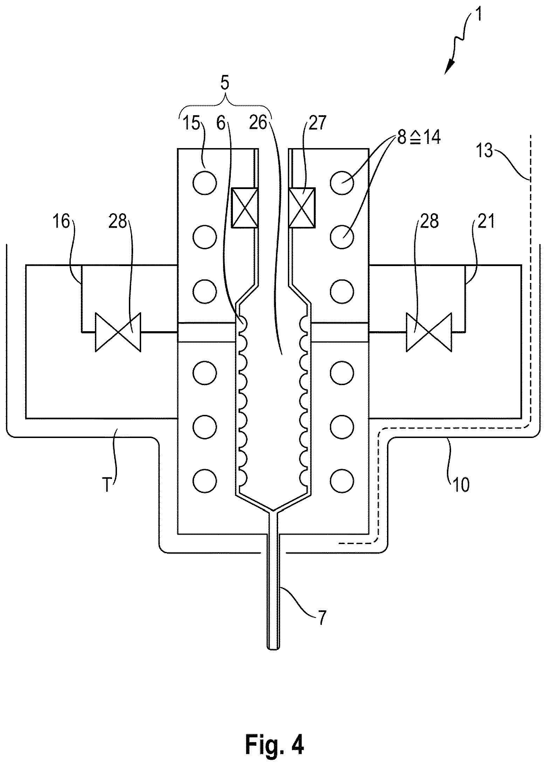

Fig. 4 zeigt schematisch einen Schnitt durch eine Vorrichtung 1 zur Herstellung von Kunststoffteilen 2. Bei diesem Ausführungsbeispiel weist die Mischvorrichtung 5 neben der Mischkammer 6 und dem Gehäuse 15 auch noch einen Rührer 26 auf. Zwischen Rührer 26 und Gehäuse 15 ist eine Dichtung 27 angeordnet. In Fig. 4 ist also ein dynamischer Mischer dargestellt. In den Leitungen 16 und 21 ist jeweils ein Ventil 28angeordnet. Diese Ventile 28 sind dazu ausgebildet, die Zuführung der Kunststoffausgangskomponenten K1 und K2 zu steuern. Die Trennvorrichtung 10 umgibt die Mischvorrichtung 5. In diesem Fall ist die Trennvorrichtung 10 der Kontur der Mischvorrichtung 5 folgend ausgebildet. Das heißt, der Abstand zwischen Trennvorrichtung 10 und Oberfläche der Mischvorrichtung 5 kann (wie im dargestellten Fall) im Wesentlichen konstant sein. Aufgrund der unregelmäßigen Oberfläche der Mischvorrichtung 5 ist aber die Trennvorrichtung 10 meist nicht durchgehend gleich beabstandet von der Oberfläche der Mischvorrichtung 5. Konkret ist zwischen der Trennvorrichtung 10 und der Oberfläche der Mischvorrichtung 5 ein den Trocknungsraum T bildender Spalt ausgebildet. Dieser Spalt kann zwischen 0 mm und 100 mm, vorzugsweise zwischen 0,3 mm und 5 mm, breit sein. In den Trocknungsraum T führt das schematisch angedeutete Zuführelement 13 für das Trocknungsmittel.

### Bezugszeichenliste:

1 Vorrichtung
2 Kunststoffteile
3a erste Kunststoff-Zuführvorrichtung
3b zweite Kunststoff-Zuführvorrichtung
4 Gas-Zuführvorrichtung
5 Mischvorrichtung
6 Mischkammer
7 Ausbringdüse
8 Kühlvorrichtung
9 Trocknungsvorrichtung
10 Trennvorrichtung
10a Basisbereich
10b Mantelbereich
10c Gegenbereich
10d Öffnung
11 Trocknungsmittel-Zuführvorrichtung
12 Trocknungsmittel-Quelle
13 Zuführelement
14 Kühlkanal
15 Gehäuse
16 Leitung
17 Quelle
18 Leitung
19 Gasquelle
20 Quelle
21 Leitung
24 Rücklauf erste Komponente
25 Rücklauf zweite Komponente
26 Rührer
27 Dichtung
28 Ventile
K1 erste flüssige Kunststoffausgangskomponente
K2 zweite flüssige Kunststoffausgangskomponente
G Gas
KG Kunststoffmischung
T Trocknungsraum
L Druckluft
X Längsachse
U Umgebung

## Patentansprüche

1. Vorrichtung (1) zur Herstellung von Kunststoffteilen (2), mit
- einer ersten Kunststoff-Zuführvorrichtung (3a) zum Zuführen einer ersten flüssigen Kunststoffausgangskomponente (K1),
- einer zweiten Kunststoff-Zuführvorrichtung (3b) zum Zuführen einer zweiten flüssigen Kunststoffausgangskomponente (K2),
- einer Mischvorrichtung (5) mit einer Mischkammer (6), wobei in der Mischkammer (6) die von den Kunststoff-Zuführvorrichtungen (3a, 3b) zuführbaren flüssigen Kunststoffausgangskomponenten (K1, K2) zu einer Kunststoffmischung (KG) vermischbar sind,
- einer Ausbringdüse (7) zum Ausbringen der Kunststoffmischung (KG) und
- einer Kühlvorrichtung (8) für die Mischvorrichtung (5),
**gekennzeichnet durch**
- eine die Mischvorrichtung (5) zumindest bereichsweise umgebende
Trocknungsvorrichtung (9), wobei die Trocknungsvorrichtung (9) eine Trennvorrichtung (10),
einen zwischen Trennvorrichtung (10) und Mischvorrichtung (5) ausgebildeten Trocknungsraum (T) und eine in den Trocknungsraum (T) mündende Trocknungsmittel-Zuführvorrichtung (11) aufweist.

2. Vorrichtung nach Anspruch 1, **dadurch gekennzeichnet, dass** durch die Trocknungsmittel-Zuführvorrichtung (11) Druckluft (L), vorzugsweise kontinuierlich, einleitbar ist.

3. Vorrichtung nach Anspruch 1 oder 2, **dadurch gekennzeichnet, dass** die
Trocknungsmittel-Zuführvorrichtung (11) eine Trocknungsmittel-Quelle (12), vorzugsweise eine Druckluft-Erzeugungsvorrichtung, und ein mit der
Trocknungsmittel-Quelle (12) verbundenes, vorzugsweise schlauchförmiges oder rohrförmiges, Zuführelement (13) aufweist.

4. Vorrichtung nach Anspruch 3, **dadurch gekennzeichnet, dass** das Zuführelement (13) auf die Ausbringdüse (7) gerichtet ist.

5. Vorrichtung nach einem der Ansprüche 1 bis 4, **dadurch gekennzeichnet, dass** das Trocknungsmittel, vorzugsweise in Form von Druckluft (L) oder in Form eines Schutzgases, einen Taupunkt von unter 10° C, vorzugsweise von unter 5° C, aufweist.

6. Vorrichtung nach einem der Ansprüche 1 bis 5, **dadurch gekennzeichnet, dass** die Vorrichtung eine Längsachse (X) aufweist.

7. Vorrichtung nach Anspruch 6, **dadurch gekennzeichnet, dass** die Trennvorrichtung (10) einen Basisbereich (10a), welcher den Trocknungsraum (T) in axialer Richtung von der Umgebung (U) abtrennt, und einen mit dem Basisbereich (10a) verbundenen Mantelbereich (10b), welcher den Trocknungsraum (T) in radialer Richtung von der Umgebung (U) abtrennt, aufweist.

8. Vorrichtung nach Anspruch 7, **dadurch gekennzeichnet, dass** der Mantelbereich (10b) die Mischvorrichtung (5) in radialer Richtung, vorzugsweise vollständig, umschließt.

9. Vorrichtung nach Anspruch 7 oder 8, **dadurch gekennzeichnet, dass** die Trennvorrichtung (10) in einem vom Basisbereich (10a) abgewandten Gegenbereich (10c) zur Umgebung (U) hin offen ist.

10. Vorrichtung nach einem der Ansprüche 1 bis 9, **dadurch gekennzeichnet, dass** die Trennvorrichtung (10) eine, vorzugsweise zentral im Basisbereich (10a) angeordnete, Öffnung (10d) aufweist, durch welche die Ausbringdüse (7) hindurchragt.

11. Vorrichtung nach einem der Ansprüche 1 bis 10, **dadurch gekennzeichnet, dass** die Kühlvorrichtung (8) zumindest einen, vorzugsweise wellenförmig ausgebildeten, Kühlkanal (14) aufweist, welcher in einem Gehäuse (15) der Mischvorrichtung (5) ausgebildet ist.

12. Vorrichtung nach einem der Ansprüche 1 bis 11, **dadurch gekennzeichnet, dass** die Trennvorrichtung (10) zum Großteil aus Metall, vorzugsweise aus Aluminium, oder aus einem flexiblen, vorzugsweise faserverstärkten, Kunststoff oder aus einem starren Kunststoff besteht.

13. Vorrichtung nach Anspruch 12, **dadurch gekennzeichnet, dass** der Kunststoff der Trennvorrichtung (10) Polyamid, Polyethylen oder Polypropylen enthält.

14. Vorrichtung nach einem der Ansprüche 1 bis 13, **gekennzeichnet durch** eine Gas-Zuführvorrichtung (4) zum Zuführen von Gas (G) zur ersten flüssigen Kunststoffausgangskomponente (K1 ), zur zweiten flüssigen Kunststoffausgangskomponente (K2) oder zur Kunststoffmischung (KG).

15. Verfahren zum Betreiben einer Vorrichtung (1) nach einem der Ansprüche 1 bis 14, mit den Schritten:
- Zuführen einer ersten flüssigen Kunststoffausgangskomponente (K1) und einer zweiten flüssigen Kunststoff-Komponente (K2) zu einer Mischkammer (6) einer Mischvorrichtung (5),
- Vermischen der flüssigen Kunststoffausgangskomponenten (K1, K2) in der Mischkammer (6) zu einer Kunststoffmischung (KG),
- Kühlen der Mischvorrichtung (5) durch eine Kühlvorrichtung (8) und
- Ausbringen der Kunststoffmischung (KG) durch eine Ausbringdüse (7), **gekennzeichnet durch** den Schritt
- Trocknen der Mischvorrichtung (5) mit einer die Mischvorrichtung (5) zumindest bereichsweise umgebenden Trocknungsvorrichtung (9), wobei die Trocknungsvorrichtung (9) eine Trennvorrichtung (10), einen zwischen Trennvorrichtung (10) und Mischvorrichtung (5) ausgebildeten Trocknungsraum (T) und eine in den Trocknungsraum (T) mündende Trocknungsmittel-Zuführvorrichtung (11) aufweist.

16. Verfahren nach Anspruch 15, **dadurch gekennzeichnet, dass** durch eine Druckluft-Erzeugungsvorrichtung der Trocknungsvorrichtung (10) zwischen 100 und 500 Normliter Druckluft pro Stunde in den Trocknungsraum (T) eingeleitet werden.

## Claims

1. A device (1) for producing plastics parts (2), comprising
- a first plastics feed device (3a) for feeding a first liquid plastics starting component (K1),
- a second plastics feed device (3b) for feeding a second liquid plastics starting component (K2),
- a mixing device (5) having a mixing chamber (6), the liquid plastics starting components (K1, K2) which can be fed by the plastics feed devices (3a, 3b) being mixable in the mixing chamber (6) to form a plastics mixture (KG),
- a discharge nozzle (7) for discharging the plastics mixture (KG), and
- a cooling device (8) for the mixing device (5),
**characterized by**
- a drying device (9) which surrounds the mixing device (5) at least in regions, the drying device (9) comprising a separating device (10), a drying chamber (T) formed between the separating device (10) and the mixing device (5), and a desiccant feed device (11) opening into the drying chamber (T).

2. The device according to claim 1, **characterized in that** compressed air (L) can be introduced, preferably continuously, by means of the desiccant feed device (11).

3. The device according to claim 1 or 2, **characterized in that** the desiccant feed device (11) has a desiccant source (12), preferably a compressed air generating device, and a preferably tubular or pipe-shaped feed element (13) which is connected to the desiccant source (12).

4. The device according to claim 3, **characterized in that** the feed element (13) is directed toward the discharge nozzle (7).

5. The device according to one of claims 1 to 4, **characterized in that** the desiccant, preferably in the form of compressed air (L) or in the form of a protective gas, has a dew point of below 10 °C, preferably below 5 °C.

6. The device according to one of claims 1 to 5, **characterized in that** the device has a longitudinal axis (X).

7. The device according to claim 6, **characterized in that** the separating device (10) has a base region (10a) which separates the drying chamber (T) from the surroundings (U) in the axial direction, and a lateral region (10b) connected to the base region (10a), which separates the drying chamber (T) from the surroundings (U) in the radial direction.

8. The device according to claim 7, **characterized in that** the lateral region (10b) surrounds the mixing device (5) in the radial direction, preferably completely.

9. The device according to claim 7 or 8, **characterized in that** the separating device (10) is open to the surroundings (U) in an opposing region (10c) facing away from the base region (10a).

10. The device according to one of claims 1 to 9, **characterized in that** the separating device (10) has an opening (10d) which is preferably arranged centrally in the base region (10a), through which opening the discharge nozzle (7) projects.

11. The device according to one of claims 1 to 10, **characterized in that** the cooling device (8) has at least one cooling duct (14) which is preferably undulating and formed in a housing (15) of the mixing device (5).

12. The device according to one of claims 1 to 11, **characterized in that** the separating device (10) consists mostly of metal, preferably of aluminum, or of a flexible, preferably fiber-reinforced, plastics material or of a rigid plastics material.

13. The device according to claim 12, **characterized in that** the plastics material of the separating device (10) contains polyamide, polyethylene or polypropylene.

14. The device according to one of claims 1 to 13, **characterized by** a gas feed device (4) for feeding gas (G) to the first liquid plastics starting component (K1), to the second liquid plastics starting component (K2) or to the plastics mixture (KG).

15. A method for operating a device (1), according to one of claims 1 to 14, comprising the following steps:
- feeding a first liquid plastics starting component (K1) and a second liquid plastics component (K2) to a mixing chamber (6) of a mixing device (5),
- mixing the liquid plastics starting components (K1, K2) in the mixing chamber (6) to form a plastics mixture (KG),
- cooling the mixing device (5) using a cooling device (8) and
- discharging the plastics mixture (KG) through a discharge nozzle (7), **characterized by** the step of
- drying the mixing device (5) using a drying device (9) which surrounds the mixing device (5) at least in regions, the drying device (9) comprising a separating device (10), a drying chamber (T) formed between the separating device (10) and the mixing device (5), and a desiccant feed device (11) opening into the drying chamber (T).

16. The method according to claim 15, **characterized in that** between 100 and 500 standard liters of compressed air per hour are introduced into the drying chamber (T) by a compressed air generating device of the drying device (10).

## Revendications

1. Dispositif (1) pour la production de pièces en matériau synthétique (2), comportant
- un premier dispositif d'alimentation en matériau synthétique (3a) pour l'alimentation en un premier composant liquide de départ matériau synthétique (K1),
- un second dispositif d'alimentation en matériau synthétique (3b) pour l'alimentation en un second composant liquide de départ de matériau synthétique (K2),
- un dispositif de mélange (5) comportant une chambre de mélange (6), les composants liquides de départ de matériau synthétique (K1, K2) pouvant être introduits par les dispositifs d'alimentation en matériau synthétique (3a, 3b) pouvant être mélangés dans la chambre de mélange (6) afin de former un mélange de matériau synthétique (KG),
- une buse de distribution (7) pour distribuer le mélange de matériau synthétique (KG), et
- un dispositif de refroidissement (8) pour le dispositif de mélange (5), **caractérisé par**
- un
dispositif de séchage (9) entourant au moins partiellement le dispositif de mélange (5),
le dispositif de séchage (9) présentant un dispositif de séparation (10), un espace de séchage (T) réalisé entre le dispositif de séparation (10) et le dispositif de mélange (5) et un dispositif d'alimentation en agent de séchage (11) débouchant dans l'espace de séchage (T).

2. Dispositif selon la revendication 1, **caractérisé en ce que** de l'air comprimé (L) peut être introduit à travers le dispositif d'alimentation en agent de séchage (11), de préférence en continu.

3. Dispositif selon la revendication 1 ou 2, **caractérisé en ce que**
le dispositif d'alimentation en agent de séchage (11) présente une source d'agent de séchage (12), de préférence un dispositif de génération d'air comprimé, et un élément d'alimentation (13), de préférence en forme de tuyau ou de tube, relié à la
source d'agent de séchage (12).

4. Dispositif selon la revendication 3, **caractérisé en ce que** l'élément d'alimentation (13) est dirigé vers la buse de distribution (7).

5. Dispositif selon l'une des revendications 1 à 4, **caractérisé en ce que** l'agent de séchage, de préférence sous forme d'air comprimé (L) ou sous forme de gaz de protection, présente un point de condensation inférieur à 10 °C, de préférence inférieur à 5 °C.

6. Dispositif selon l'une des revendications 1 à 5, **caractérisé en ce que** le dispositif présente un axe longitudinal (X).

7. Dispositif selon la revendication 6, **caractérisé en ce que** le dispositif de séparation (10) présente une zone de base (10a) qui sépare l'espace de séchage (T) de l'environnement (U) dans la direction axiale, et une zone d'enveloppe (10b) reliée à la zone de base (10a), laquelle zone d'enveloppe sépare l'espace de séchage (T) de l'environnement (U) dans la direction radiale.

8. Dispositif selon la revendication 7, **caractérisé en ce que** la zone d'enveloppe (10b) entoure le dispositif de mélange (5), de préférence entièrement, dans la direction radiale.

9. Dispositif selon la revendication 7 ou 8, **caractérisé en ce que** le dispositif de séparation (10) est ouvert sur l'environnement (U) dans une zone opposée (10c) orientée à l'opposé de la zone de base (10a).

10. Dispositif selon l'une des revendications 1 à 9, **caractérisé en ce que** le dispositif de séparation (10) présente une ouverture (10d), disposée de préférence au centre dans la zone de base (10a), à travers laquelle la buse de distribution (7) fait saillie.

11. Dispositif selon l'une des revendications 1 à 10, **caractérisé en ce que** le dispositif de refroidissement (8) présente au moins un canal de refroidissement (14), de préférence réalisé de manière ondulée, lequel est réalisé dans un boîtier (15) du dispositif de mélange (5).

12. Dispositif selon l'une des revendications 1 à 11, **caractérisé en ce que** le dispositif de séparation (10) se compose principalement de métal, de préférence d'aluminium, ou d'un matériau synthétique souple, de préférence renforcé de fibres, ou d'un matériau synthétique rigide.

13. Dispositif selon la revendication 12, **caractérisé en ce que** le matériau synthétique du dispositif de séparation (10) contient du polyamide, du polyéthylène ou du polypropylène.

14. Dispositif selon l'une des revendications 1 à 13, **caractérisé par** un dispositif d'alimentation en gaz (4) pour l'alimentation en gaz (G) du premier composant liquide de départ de matériau synthétique (K1), du second composant liquide de départ de matériau synthétique (K2) ou du mélange de matériau synthétique (KG).

15. Procédé permettant de faire fonctionner un dispositif (1) selon l'une des revendications 1 à 14, comportant les étapes :
- d'alimentation d'une chambre de mélange (6) d'un dispositif de mélange (5) en un premier
composant liquide de départ de matériau synthétique (K1) et en un second composant liquide de départ de matériau synthétique (K2),
- de mélange des composants liquides de départ de matériau synthétique (K1, K2) dans la chambre de mélange (6) pour former un mélange de matériau synthétique (KG),
- de refroidissement du dispositif de mélange (5) par un dispositif de refroidissement (8), et
- de distribution du mélange de matériau synthétique (KG) par une buse de distribution (7), **caractérisé par** l'étape
- de séchage du dispositif de mélange (5) à l'aide d'un dispositif de séchage (9) qui entoure au moins partiellement le dispositif de mélange (5), le dispositif de séchage (9) présentant un dispositif de séparation (10), un espace de séchage (T) réalisé entre le dispositif de séparation (10) et le dispositif de mélange (5) et un dispositif d'alimentation en agent de séchage (11) débouchant dans l'espace de séchage (T).

16. Procédé selon la revendication 15, **caractérisé en ce qu'**entre 100 et 500 litres standard d'air comprimé sont introduits par heure dans l'espace de séchage (T) par un dispositif de génération d'air comprimé du dispositif de séchage (10).
